# EUROPEAN PATENT APPLICATION

(11) **EP 3 845 982 A1**
(43) Date of publication of application: **07.07.2021**
(21) Application number: 20189575.2
(22) Date of filing: 05.08.2020
(51) Int. Cl.: G05B 19/042, G06Q 50/02, G06Q 10/06, G05B 15/02, A01B 79/00

(54) **CONTROL SYSTEM AND METHOD FOR ADVANCED DIAGNOSTICS FOR AN AUTOMATED HARVESTING MACHINE**

(30) Priority: 30.12.2019 US 201962955129 P
(71) Applicant: AGCO Corporation, Duluth, GA 30096 (US)
(72) Inventor: KOCH, Jared, Hesston, KS 67062 (US); SCHLEDER, Caleb, Hesston, KS 67062 (US); KIRK, Kevin, Hesston, KS 67062 (US)
(74) Representative: AGCO Intellectual Property Department

(57) **Abstract**

A combine harvester and method of detecting and notifying an operator of operational inefficiencies of the combine harvester are provided. The combine harvester may include a user interface, a plurality of sensors, and a control system having a processing element configured to perform certain steps. The steps may include receiving, via the user interface or a database, data representative of a performance target; receiving, via the user interface or the database, data representative of a mechanical configuration of the combine harvester; detecting, via a sensor, data representative of an operational metric; determining, via the processing element, whether the operational metric satisfies the performance target; determining, via the processing element, a suggested adjustment to the mechanical configuration associated with the operational metric; and displaying, via the user interface, the suggested adjustment to the mechanical configuration associated with the operational metric.

## Description

### BACKGROUND

The performance of an automated harvesting machine, such as a combine harvester, is often constrained by its mechanical setup. This constraint can be created by unique crop conditions, improper machine preparation, or some misunderstanding of a harvest setup on the machine. The improper setup may prevent the system from operating optimally and providing maximum value to an operator. Additionally, the operator is often unaware of further enhancements that may be available to increase the productivity of the machine. Harvesting machines often include automation systems that may make some necessary adjustments to improve overall machine performance, but such systems often do not make up for all improper setups.

The background discussion is intended to provide information related to the present invention which is not necessarily prior art.

### SUMMARY

The present invention solves the above-described problems and other problems by providing methods of controlling operations of a combine harvester to provide advanced diagnostics and improve machine performance.

A computer-implemented method of detecting and notifying an operator of operational inefficiencies of a combine harvester according to an embodiment of the present invention broadly comprises receiving, via a user interface or a database, data representative of a performance target; receiving, via the user interface or the database, data representative of a mechanical configuration of the combine harvester; and detecting, via a sensor, data representative of an operational metric.

The method further includes determining, via a processing element, whether the operational metric satisfies the performance target; determining, via the processing element, a suggested adjustment to the mechanical configuration associated with the operational metric; and displaying, via the user interface, the suggested adjustment to the mechanical configuration associated with the operational metric.

By detecting the operational metric during operation, the determination of performance target achievement is more accurate. Additionally, determining performance target failure and displaying the suggested adjustment to the mechanical configuration during operation allows an operator to readily determine whether optimizing the suggested adjustment is economically worthwhile before harvesting an entire field.

This summary is provided to introduce a selection of concepts in a simplified form that are further described below in the detailed description. This summary is not intended to identify key features or essential features of the claimed subject matter, nor is it intended to be used to limit the scope of the claimed subject matter. Other aspects and advantages of the present invention will be apparent from the following detailed description of the embodiments and the accompanying drawing figures.

### BRIEF DESCRIPTION OF THE DRAWING FIGURES

Embodiments of the present invention are described in detail below with reference to the attached drawing figures, wherein:
FIG. 1 is a perspective view of an exemplary combine harvester with which principles of the present invention may be implemented;
FIG. 2 is a block diagram depicting selected components of the combine harvester of FIG. 1;
FIG. 3 is a block diagram depicting selected components of a control system of the combine harvester of FIG. 1; and
FIG. 4 is a flowchart depicting exemplary steps of a method according to an embodiment of the present invention.

The drawing figures do not limit the present invention to the specific embodiments disclosed and described herein. The drawings are not necessarily to scale, emphasis instead being placed upon clearly illustrating the principles of the invention.

### DETAILED DESCRIPTION OF THE EMBODIMENTS

The following detailed description of the invention references the accompanying drawings that illustrate specific embodiments in which the invention can be practiced. The embodiments are intended to describe aspects of the invention in sufficient detail to enable those skilled in the art to practice the invention. Other embodiments can be utilized and changes can be made without departing from the scope of the present invention. The following detailed description is, therefore, not to be taken in a limiting sense. The scope of the present invention is defined only by the appended claims, along with the full scope of equivalents to which such claims are entitled.

In this description, references to "one embodiment", "an embodiment", or "embodiments" mean that the feature or features being referred to are included in at least one embodiment of the technology. Separate references to "one embodiment", "an embodiment", or "embodiments" in this description do not necessarily refer to the same embodiment and are also not mutually exclusive unless so stated and/or except as will be readily apparent to those skilled in the art from the description. For example, a feature, structure, act, etc. described in one embodiment may also be included in other embodiments, but is not necessarily included. Thus, the present technology can include a variety of combinations and/or integrations of the embodiments described herein.

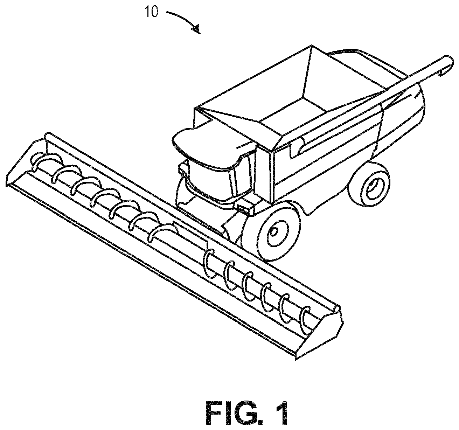

Turning to FIG. 1, a combine harvester 10 which may implement aspects of the present invention is illustrated. The illustrated combine harvester 10 is an autonomous combine, but the principles of the present invention may be applied to any other harvesting system, such as a combine harvester trailer pulled by a tractor. The combine harvester 10 travels a field to harvest a grain such as wheat, corn, soy, or the like.

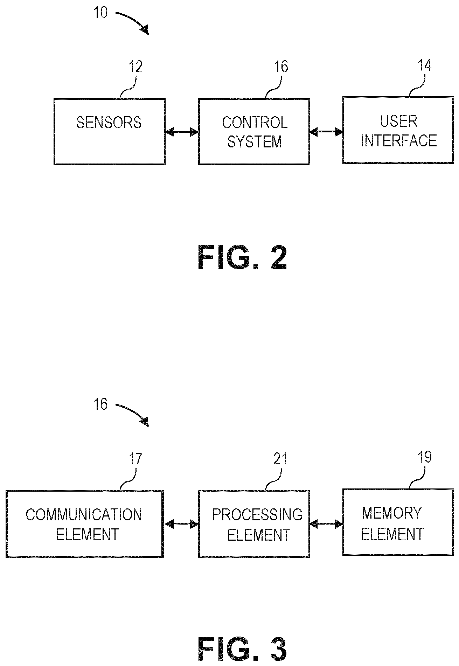

As depicted in FIG. 2, the combine harvester 10 may include a plurality of sensors 12, a user interface 14, and a control system 16. The sensors 12 detect operational metrics of the combine 10 and may include a yield sensor, a sensor for detecting grain loss at a header of the combine harvester 10, a sensor for detecting material other than grain (MOG) amount in an elevator of the combine harvester 10, a grain moisture sensor, a grain quality sensor, a grain cleanliness sensor, a detector for determining where grain exits a processing stage in the combine harvester 10, a spread detector, a fuel consumption sensor, a sensor for detecting speed of the combine harvester 10, a sensor for determining a location of the combine harvester 10, and/or any other sensors that sense operational aspects of the combine harvester 10. The sensors 12 may include cameras, moisture sensors, accelerometers, etc. and associated electronics, transmitters, and other data transmission elements. The sensors 12 may be positioned at various locations on the combine harvester 10 for detecting their corresponding operational metrics. The sensors 12 are operable to generate data representative of the operational metrics and transmit the data to the control system 16.

The user interface 14 is operable to display text, graphics, icons, or other items representative of data or other information relevant to the operation and/or performance of the combine harvester, receive the data and/or information from the control system 16, and display the data and/or information. The user interface 14 may comprise processing elements executing one or more software applications, display drivers, and/or one or more functionable inputs such as buttons, switches, scroll wheels, a touch screen associated with a display, voice recognition elements such as a microphone, pointing devices such as mice, touchpads, tracking balls, styluses, cameras such as a digital still or video camera, combinations thereof, or the like. For example, the user interface 14 may include or may be integrated with a touch screen display configured to enable a user to interact with the user interface 14 by touching or pointing at display areas to provide information, make selections, and/or label something on the screen.

The control system 16 is configured to control operations of the combine harvester 10. As depicted in FIG. 3, an embodiment of the control system 16 may comprise a communication element 17, a memory element 19, a processing element 21. The communication element 17 is in communication with the processing element 21 and memory element 19 and allows communication with systems or devices external to the control system 16. The communication element 17 may include signal or data transmitting and receiving circuits, such as antennas, amplifiers, filters, mixers, oscillators, digital signal processors (DSPs), and the like. The communication element 17 may establish communication wirelessly by utilizing RF signals and/or data that comply with communication standards such as cellular 2G, 3G, 4G, 5G, or LTE, WiFi, WiMAX, Bluetooth®, BLE, or combinations thereof.

The memory element 19 may include data storage components, such as read-only memory (ROM), programmable ROM, erasable programmable ROM, random-access memory (RAM) such as static RAM (SRAM) or dynamic RAM (DRAM), cache memory, hard disks, floppy disks, optical disks, flash memory, thumb drives, universal serial bus (USB) drives, or the like, or combinations thereof. In some embodiments, the memory element 19 may be embedded in, or packaged in the same package as, the processing element 21. The memory element 19 may include, or may constitute, a "computer-readable medium". The memory element 19 may store the instructions, code, code segments, software, firmware, programs, applications, apps, services, daemons, or the like that are executed by the processing element 21.

The processing element 21 may include processors, microprocessors (single-core and multi-core), microcontrollers, DSPs, field-programmable gate arrays (FPGAs), analog and/or digital application-specific integrated circuits (ASICs), or the like, or combinations thereof. The processing element 21 may generally execute, process, or run instructions, code, code segments, software, firmware, programs, applications, apps, processes, services, daemons, or the like. The processing element 21 may also include hardware components such as finite-state machines, sequential and combinational logic, and other electronic circuits that can perform the functions necessary for the operation of the current invention. The processing element 21 may be in communication with the other electronic components through serial or parallel links that include address busses, data busses, control lines, and the like, such as the sensors 12 and the user interface 14. The processing element 21 may be in communication with the sensors 12 and the user interface 14 via the communication element 17 and/or direct wiring. The processing element 21 of the control system 16 may be configured to send and/or receive information to and/or from the sensors 12 and the user interface 14. The processing element 21 of the control system 16 may also be configured to send and/or receive commands to and/or from the sensors 12 and the user interface 14.

The processing element 21 of the control system 16 may be configured to receive from the user interface 14, the memory element 19, and/or an external database data representative of a performance target. The performance target may be received by an operator via the user interface 14 in response to one or more prompts displayed by the user interface 14. The performance targets may be stored in the memory element 19 of the control system 16 and/or an external database for later retrieval by the control system 16. The performance target may also be received from an external device, via the communication element 17. The performance target may include a yield target, a harvest rate, a maximum grain loss, a maximum fuel consumption rate, a minimum ground speed of the combine harvester 10, a minimum rotor speed of the combine harvester 10, a grain quality, a grain moisture, or the like.

The processing element 21 of the control system 16 may further be configured to receive from the user interface 14, the memory element 19, and/or an external database data representative of a mechanical configuration of the combine harvester 10. The mechanical configuration may be received by the user interface 14 in response to one or more prompts displayed by the user interface 14 for determining the mechanical configuration. The processing element 21 of the control system 16 may be configured to direct the user interface 14 to display the prompts upon startup of the combine harvester 10, after detection of a change of the mechanical configuration, after a period of time, or the like. The mechanical configuration may be stored in the memory element 19 of the control system 16 and/or an external database for later retrieval by the control system 16. The mechanical configuration may include a concave type, a sieve setup, a sieve type, a finger grate setup, a separator grate type, a separator grate cover setup, a duct setting, a spreader kit setup, or the like.

The processing element 21 of the control system 16 may further be configured to receive from the user interface 14, the memory element 19, and/or an external database data representative of one or more agricultural parameters. The agricultural parameters may be received by the user interface 14 in response to one or more prompts displayed by the user interface 14 for determining one or more agricultural parameters. The agricultural parameters may be stored in the memory element 19 of the control system 16 and/or an external database for later retrieval by the control system 16. The agricultural parameters may also be received from an external device, via the communication element 17. The agricultural parameters may include a grain type, a size of a field, a commodity price of the grain, a germination rate of the grain, a nutrient absorption rate of the grain, and/or other information associated with agricultural inputs.

The processing element 21 of the control system 16 may be configured to receive one or more operational metrics from one or more of the sensors 12. The operational metrics may include measurements of the grain, environment, combine harvester 10, and/or other information relevant to harvesting of the grain and/or operation of the combine harvester 10. For example, the operational metrics may include a yield, a harvest rate, a header loss, an amount of material other than grain (MOG) in an elevator of the combine harvester 10, a grain moisture, a grain quality, a grain cleanliness, a location where grain exits a processing stage of the combine harvester 10, a spread of MOG expelled by the combine harvester 10, an amount of fuel consumed by the combine harvester 10, an amount of fuel remaining in the combine harvester 10, a speed of the combine harvester 10, a number of starts/stops performed by the combine harvester 10, and/or a location of the combine harvester 10.

The processing element 21 of the control system 16 may be configured to determine whether the combine harvester 10 has reached a control limit. The control limit may be a limit imposed by the control system 16 on the combine harvester 10 to optimize the operation of the combine harvester 10 with its current mechanical configuration. The control limit may be a maximum rotor speed of the combine harvester 10, a maximum ground speed of the combine harvester 10, or the like. The control limit may be triggered by an operational metric (such as grain quality, grain moisture, yield, fuel efficiency, capacity of the combine harvester 10, etc.) or it may be predetermined based on the mechanical configuration.

The processing element 21 of the control system 16 may be configured to determine an amount of field remaining to be harvested and/or an amount of the field already harvested. If the processing element 21 of the control system 16 determines that a control limit has been achieved, the processing element 21 may be configured to determine how much field is yet to be harvested based on one or more agricultural parameter (such as the size of the field) and one or more operational metric (such as the location of the combine harvester 10, the speed of the combine harvester 10, a time of operation of the combine harvester 10, etc.). The processing element 21 may be configured to calculate a percentage of the field harvested and determine whether it achieves a threshold. For example, the threshold may be less than 40% of the field harvested.

The processing element 21 of the control system 16 may further be configured to calculate one or more performance metrics. The processing element 21 may be configured to calculate the performance metrics based on one or more agricultural parameter and/or one or more operational metric. The performance metrics may include an estimated loss in bushels of grain per acre, an estimated monetary loss, a harvest rate in acres per hour, an operating cost per hour, a spread efficiency percentage, and/or an amount of nutrients consumed due to new plant growth sprouted from lost grain falling on the field. For example, the processing element 21 may be configured to calculate a loss in bushels per acre using data representative of the yield from the yield sensor; data representative of the header loss from the header loss sensor; and/or data representative of the distance traveled from an accelerometer, global positioning system (GPS), a cellular module, or the like. The processing element 21 may be configured to calculate the monetary loss based on the loss in bushels per acre and the grain type, the commodity price for the grain type, and/or the percentage of field remaining. The processing element 21 may be configured to calculate the harvest rate based on the data representative of the speed of the combine harvester 10, the data representative of the operational time of the combine harvester 10, the data representative of the number of stops/starts of the combine harvester 10, etc. The processing element 21 may be configured to calculate the operating cost of the combine harvester 10 based on the data representative of the fuel consumption rate, the harvest rate, etc. The processing element 21 may be configured to calculate the spread efficiency percentage based on the data representative of the spread from the spread detector. The processing element 21 may be configured to detect a percentage representing nutrients consumed by new plant growth sprouting from grain loss using data representative of the header loss (or other crop loss), data representative of nutrient absorption rate associated with the grain type, data representative of a germination rate associated with the grain type, and/or data representative of an estimate growth period post-harvest.

The processing element 21 of the control system 16 may be configured to determine whether one or more of the operational metrics and/or one or more of the performance metrics satisfy one or more performance target. For example, the processing element 21 may compare the detected yield to the performance target yield. The processing element 21 may be configured to determine whether the detected yield is within an acceptable range of the performance target yield. Additionally, the processing element 21 may compare the total loss with the maximum grain loss and determine whether the total loss is above the maximum grain loss. The processing element 21 may be configured to determine whether the detected combine harvester 10 speed is below the minimum ground speed.

The processing element 21 of the control system 16 may be configured to determine a suggested adjustment to the mechanical configuration associated with improving the operational metric and/or performance metric. The processing element 21 may be configured to search a database (stored on the memory element 19 and/or an external database) having a look-up table with optimal mechanical configurations for certain grain types. For example, the processing element 21 may submit the grain type and return the optimal mechanical configuration for that grain type. The processing element 21 may be configured to compare the optimal mechanical configuration for that grain type with the mechanical configuration of the combine harvester 10. Additionally, the look-up table may include corresponding estimated improvement of operational metrics associated with known adjustments to the mechanical configuration. The processing element 21 may be configured to calculate an amount of money saved, an increase in production, a value of the increased production, and/or other improvement estimates associated with the estimated improvement of operational metrics. The processing element 21 may also receive data representative of a cost associated with the adjustment to the mechanical configuration.

For example, if the grain type is a large grain, the look-up table may indicate that the optimal mechanical configuration does not include a sieve and an estimated improvement of operational metric associated with removing the sieve for large grain harvesting, such as an increase in combine harvester 10 speed, an increase of the rotor of the header, a percentage increase in capacity, etc. The processing element 21 may additionally be configured to calculate an improvement estimate (such as harvest rate, operating cost per acre, etc.) based on the estimated improvement of operational metric. Other suggested adjustments to the mechanical configuration may include adding a sieve to the sieve setup, changing the concave type, changing the separator grate type, changing the duct setting, adding a spread kit, using a logistical application for coordinating the combine harvester 10 with movements of other harvesting machines, and/or any other mechanical and/or software adjustments that affect operation of the combine harvester 10.

Additionally or alternatively, the look-up table may also include suggested mechanical adjustments associated with certain performance and/or operational metrics that are not satisfied. For example, if the processing element 21 determines that the harvest rate is not satisfied, the processing element 21 may search for suggested adjustments to the mechanical configuration associated with harvest rate. The processing element 21 may be configured to return one or more of the suggested adjustments associated with harvest rate from the table. In some embodiments, the look-up table may include additional instructions for the processing element 21. For example, the look-up table may instruct the processing element 21 to further analyze the mechanical configuration. The processing element 21 may be instructed to determine whether the grain type of the agricultural parameters is consistent with the concave type of the mechanical configuration. If the grain type is inconsistent with the concave type, such as if the grain type is a large grain (corn, soy, etc.) and the concave type is configured for small grain (wheat, barley, etc.), then the processing element 21 may be configured to determine that a change in the concave type consistent with the large grain, such as a large grain concave type, is a suggested adjustment associated with harvest rate. Additionally, the look-up table may return instructions for the processing element 21 to determine whether the sieve setup is suitable for the grain type. The processing element 21 may be configured to determine that the mechanical configuration includes the presence of a sieve in the combine harvester 10 and therefore that removal of the sieve is a suggested adjustment. The processing element 21 may be configured to determine the suggested adjustment to the mechanical configuration any number of ways without departing from the scope of the present invention.

The processing element 21 of the control system 16 is configured to display the suggested adjustments to the mechanical configuration on the user interface 14. The processing element 21 may also be configured to display, via the user interface 14, estimated improvement of operational metrics, estimated improvements, and/or costs associated with the suggested adjustments to the mechanical configuration. For example, if the processing element 21 determines that the operational metric of loss detected by the sensors 12 of the combine harvester 10 is more than the performance target loss and that removing the sieve is the suggested mechanical adjustment, the processing element 21 may display a message that suggests removing the sieve and the calculated improvement estimate comprising an increase in dollars per acre on the user interface 14. Additionally, the processing element 21 may be configured to display the calculated nutrient consumption due to the loss on the user interface 14. As another example, if the processing element 21 determines that the operational metric of harvest rate is below the performance target harvest rate and that removal of the sieve is the suggested mechanical adjustment, the processing element 21 may display a message that suggests removing the sieve and the calculated improvement estimate comprising a decrease in costs per acre. The processing element 21 may also be configured to display, via the user interface 14, running averages of one or more of the operational metrics and/or performance metrics. The processing element 21 may also be configured to display, via the user interface 14, dealership information about one or more of the suggested adjustments.

### COMPUTER-IMPLEMENTED METHOD EMBODIMENT

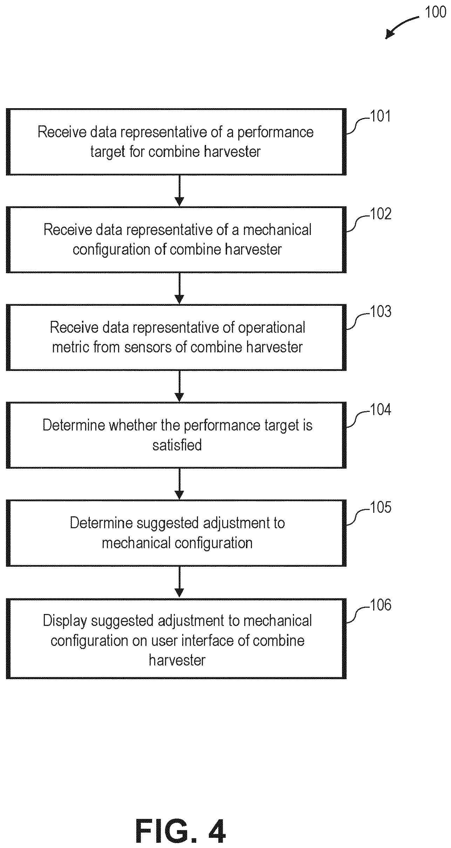

The flow chart of FIG. 4 depicts the steps of an exemplary method 100 of detecting and notifying an operator of operational inefficiencies of a combine harvester. In some alternative implementations, the functions noted in the various blocks may occur out of the order depicted in FIG. 4. For example, two blocks shown in succession in FIG. 4 may in fact be executed substantially concurrently, or the blocks may sometimes be executed in the reverse order depending upon the functionality involved. In addition, some steps may be optional.

The method 100 is described below, for ease of reference, as being executed by exemplary devices and components introduced with the embodiments illustrated in FIGs. 1-3. The steps of the method 100 may be performed by the control system 16 through the utilization of processors, transceivers, hardware, software, firmware, or combinations thereof. However, some of such actions may be distributed differently among such devices or other devices without departing from the spirit of the present invention. Control of the system may also be partially implemented with computer programs stored on one or more computer-readable medium(s). The computer-readable medium(s) may include one or more executable programs stored thereon, wherein the program(s) instruct one or more processing elements to perform all or certain of the steps outlined herein. The program(s) stored on the computer-readable medium(s) may instruct processing element(s) to perform additional, fewer, or alternative actions, including those discussed elsewhere herein.

Referring to step 101, data representative of a performance target is received via the user interface, the memory element of the control system, and/or an external database. The performance target may be received by the user interface in response to one or more prompts displayed by the user interface for determining one or more performance targets. The performance targets may be stored in the memory element of the control system and/or an external database for later retrieval by the control system. The performance target may also be received from an external device, via the communication element of the control system. The performance target may include a yield target, a maximum grain loss, a maximum fuel consumption rate, a minimum ground speed of the combine harvester, a minimum rotor speed of the combine harvester, a grain quality, a grain moisture, or the like.

Referring to step 102, data representative of a mechanical configuration of the combine harvester is received via the user interface, the memory element, and/or the external database. The mechanical configuration may be received via the user interface in response to one or more prompts displayed by the user interface for determining the mechanical configuration. The prompts may be displayed upon startup of the combine harvester, after detection of a change of the mechanical configuration, after a period of time, or the like. The mechanical configuration may be stored in the memory element of the control system and/or the external database for later retrieval by the control system. The mechanical configuration may include a concave type, a sieve setup, a sieve type, a finger grate setup, a separator grate type, a separator grate cover setup, a duct setting, a spreader kit setup, or the like.

This step may also include receiving data representative of one or more agricultural parameters via the user interface, the memory element, and/or the external database. The agricultural parameters may also be received via the user interface in response to one or more prompts displayed on the user interface for determining one or more agricultural parameters. The agricultural parameters may be stored in the memory element of the control system and/or the external database for later retrieval by the control system. The agricultural parameters may also be received from an external device, via the communication element. The agricultural parameters may include a grain type, a size of a field, a commodity price of the grain, a germination rate of the grain, a nutrient absorption rate of the grain, and/or other information associated with agricultural inputs.

Referring to step 103, data representative of one or more operational metrics may be received via one or more of the sensors of the combine harvester. The operational metrics may include measurements of the grain, environment, combine harvester, and/or other information relevant to harvesting of the grain and/or operation of the combine harvester. For example, the operational metrics may be a yield, a harvest rate, a header loss, an amount of material other than grain (MOG) in an elevator of the combine harvester, a grain moisture, a grain quality, a grain cleanliness, a location where grain exits a processing stage of the combine harvester, a spread of MOG expelled by the combine harvester, an amount of fuel consumed by the combine harvester, an amount of fuel remaining in the combine harvester, a speed of the combine harvester, a number of starts/stops performed by the combine harvester, and/or a location of the combine harvester.

This step may include determining whether the combine harvester has reached a control limit. The control limit may be a limit imposed on the combine harvester to optimize the operation of the combine harvester with its current mechanical configuration. The control limit may be a maximum rotor speed of the combine harvester, a maximum ground speed of the combine harvester, or the like that is limited in order to maintain a certain performance metric, such as grain quality, grain moisture, yield, fuel efficiency, etc.

This step may include determining an amount of field remaining to be harvested and/or an amount already harvested. If a control limit has been achieved, an amount of field to be harvested may be determined based on one or more agricultural parameters (such as the size of the field) and one or more operational metrics (such as the location of the combine harvester, the speed of the combine harvester, a time of operation of the combine harvester, etc.). A percentage of the field harvested may be calculated and compared with a threshold to determine whether the percentage has reached the threshold. For example, the threshold may be less than 40% of the field harvested.

This step may also include calculating one or more performance metrics. The performance metrics may be calculated based on one or more agricultural parameters and/or one or more operational metrics. The performance metrics may include an estimated loss in bushels of grain per acre, an estimated monetary loss, a harvest rate in acres per hour, an operating cost per hour, a spread efficiency percentage, and/or an amount of nutrients consumed due to loss regrowth. For example, a loss in bushels per acre may be calculated using data representative of the yield from the yield sensor; data representative of the header loss from the header loss sensor; and/or data representative of the distance traveled from an accelerometer, global positioning system (GPS), a cellular module, or the like. Monetary loss may be calculated based on the loss in bushels per acre, the grain type, the commodity price for the grain type, and/or the percentage of field remaining. The harvest rate may be calculated based on the data representative of the speed of the combine harvester, the data representative of the operational time of the combine harvester, the data representative of the number of stops/starts of the combine harvester, etc. The operating cost of the combine harvester may be calculated based on the data representative of the fuel consumption rate, the harvest rate, etc. The spread efficiency percentage may be calculated based on the data representative of the spread from the spread detector. An amount of nutrients lost due to loss may be determined using data representative of the header loss (or other sources of crop loss), data representative of nutrient absorption rate associated with the grain type, data representative of a germination rate associated with the grain type, and/or data representative of an estimate growth period post-harvest.

Referring to step 104, one or more of the operational metrics and/or one or more of the performance metrics may be compared with one or more performance targets to determine whether the operational metrics and/or performance metrics satisfy the corresponding performance targets. For example, the detected yield may be compared to the performance target yield. The detected yield may be analyzed to determine whether it is within an acceptable range of the performance target yield. Additionally, the total loss may be compared with the maximum grain loss to determine whether the total loss is above the maximum grain loss. The detected combine harvester speed may be analyzed to determine whether it is below the minimum ground speed.

Referring to step 105, a suggested adjustment to the mechanical configuration associated with improving the operational metric and/or performance metric is determined. A database (stored on the memory element and/or an external database) having a look-up table with optimal mechanical configurations for certain grain types may be searched. For example, the grain type may be used to find the optimal mechanical configuration for that grain type. The optimal mechanical configuration for that grain type may be compared with the mechanical configuration of the combine harvester to determine any differences. The differences may indicate suggested adjustments to the mechanical configuration. Additionally, the look-up table may include corresponding estimated improvement of operational metrics associated with each adjustment to the mechanical configuration. This step may include calculating an amount of money saved, an increase in production, a value of the increased production, and/or other improvement estimates associated with the estimated improvement of operational metrics. Costs associated with the adjustment to the mechanical configuration may also be received.

For example, if the grain type is a large grain, the look-up table may indicate that the optimal mechanical configuration does not include a sieve and an estimated improvement of operational metric associated with removing the sieve for large grain harvesting, such as an increase in combine harvester speed, an increase of the rotor of the header, a percentage increase in capacity, etc. This step may include calculating an improvement estimate (such as harvest rate, operating cost per acre, etc.) based on the estimated improvement of operational metric. Other suggested adjustments to the mechanical configuration may include adding a sieve to the sieve setup, changing the concave type, changing the separator grate type, changing the duct setting, adding a spread kit, using a logistical application for coordinating the combine harvester with movements of other harvesting machines, and/or the like.

Additionally or alternatively, the look-up table may also include suggested mechanical adjustments associated with certain performance and/or operational metrics that are not satisfied. For example, if the harvest rate performance target is not satisfied, this step may include searching for suggested adjustments to the mechanical configuration associated with harvest rate. One or more of the suggested adjustments associated with harvest rate may be returned from the table. In some embodiments, the look-up table may include additional instructions. For example, the look-up table may instructions to further analyze the mechanical configuration. The instructions may include determining whether the grain type of the agricultural parameters is consistent with the concave type of the mechanical configuration. If the grain type is inconsistent with the concave type, such as if the grain type is a large grain (corn, soy, etc.) and the concave type is configured for small grain (wheat, barley, etc.), then it may be determined that a suggested adjustment associated with harvest rate includes a change in the concave type consistent with the large grain, such as a large grain concave type. Additionally, the look-up table may return instructions for determining whether the sieve setup is suitable for the grain type. This step may include determining whether mechanical configuration includes the presence of a sieve in the combine harvester and therefore that removal of the sieve is a suggested adjustment. The suggested adjustment to the mechanical configuration may be determined any number of ways without departing from the scope of the present invention.

Referring to step 106, the suggested adjustments to the mechanical configuration is displayed on the user interface. The estimated improvement of operational metrics, estimated improvements, and/or costs associated with the suggested adjustments to the mechanical configuration may also be displayed. Additionally, running averages of one or more of the operational metrics and/or performance metrics may be displayed. This step may also include displaying dealership information about one or more of the suggested adjustments, such as dealership contact information or the like.

The method 100 may include additional, less, or alternate steps and/or device(s), including those discussed elsewhere herein.

Although the invention has been described with reference to the embodiments illustrated in the attached drawing figures, it is noted that equivalents may be employed and substitutions made herein without departing from the scope of the invention as recited in the claims.

Having thus described various embodiments of the invention, what is claimed as new and desired to be protected by Letters Patent includes the following:

## Claims

1. A computer-implemented method of detecting and notifying an operator of operational inefficiencies of a combine harvester, the computer-implemented method comprising:
receiving, via a user interface or a database, data representative of a performance target;
receiving, via the user interface or the database, data representative of a mechanical configuration of the combine harvester;
detecting, via a sensor, data representative of an operational metric;
determining, via a processing element, whether the operational metric satisfies the performance target;
determining, via the processing element, a suggested adjustment to the mechanical configuration associated with the operational metric; and
displaying, via the user interface, the suggested adjustment to the mechanical configuration associated with the operational metric.

2. The computer-implemented method of claim 1, further comprising calculating, via the processing element, a performance metric based at least in part on the operational metric.

3. The computer-implemented method of claim 2, wherein the step of displaying the suggested adjustment includes displaying the performance metric.

4. The computer-implemented method of claim 2, further comprising receiving, via the user interface or the database, data representative of an agricultural parameter, wherein the step of calculating the performance metric is based at least in part on the agricultural parameter.

5. The computer-implemented method of claim 4, wherein the agricultural parameter is a size of a field, further comprising -
determining, via the processing element, whether the combine harvester has reached a control limit; and
determining, via the processing element, a percentage of the field remaining to be harvested.

6. The computer-implemented method of claim 4, wherein the step of detecting the operational metric includes receiving, via the processing element, data representative of a harvest rate, a header loss, and a location of the combine.

7. The computer-implemented method of claim 6, wherein the step of calculating the performance metric includes -
calculating, via the processing element, a distance traveled based at least in part on the location of the combine; and
calculating, via the processing element, a loss of bushels of the grain per acre based at least in part on the harvest, the header loss, and the distance traveled.

8. The computer-implemented method of claim 7, wherein the agricultural parameter includes a grain type and a commodity price for the grain type, and wherein the step of calculating the performance metric includes calculating, via the processing element, a monetary loss based at least in part on the commodity price for the grain type.

9. The computer-implemented method of claim 8, further comprising -
determining, via the processing element, an improvement in the operational metric associated with the suggested adjustment; and
calculating, via the processing element, a monetary amount saved based at least in part on the monetary loss and the improvement in the operational metric,
wherein the step of displaying the suggested adjustment includes displaying the monetary amount saved.

10. The computer-implemented method of claim 1, wherein -
the mechanical configuration includes at least one of a concave type, a sieve setup, a sieve type, a finger grate setup, a separator grate type, a separator grate cover setup, or a duct setting; and
the adjustment includes at least one of removing a sieve from the sieve setup, adding a sieve to the sieve setup, changing the concave type, changing the separator grate type, changing the duct setting, or adding a spread kit.

11. A computer-implemented method of detecting and notifying an operator of operational inefficiencies of a combine harvester, the computer-implemented method comprising:
receiving, via a user interface or a database, data representative of an agricultural parameter, a performance target, and a mechanical configuration of the combine harvester;
detecting, via a plurality of sensors, data representative of a plurality of operational metrics;
calculating, via a processing element, a performance metric corresponding to the performance target based at least in part on the operational metrics;
determining, via the processing element, whether the performance metric satisfies the performance target;
determining, via the processing element, a suggested adjustment to the mechanical configuration associated with improving one of the operational metrics;
calculating, via the processing element, an improvement estimate associated with the suggested adjustment to the mechanical configuration; and
displaying, via the user interface, the suggested adjustment to the mechanical configuration associated with the operational metric and the improvement estimate associated with the suggested adjustment to the mechanical configuration.

12. The computer-implemented method of claim 11, wherein the agricultural parameter includes at least one of a grain type, a size of a field, a commodity price of the grain, a germination rate of the grain, or a nutrient absorption rate of the grain.

13. The computer-implemented method of claim 11, wherein the mechanical configuration includes at least one of a concave type, a sieve setup, a sieve type, a finger grate setup, a separator grate type, a separator grate cover setup, or a duct setting; and the suggested adjustment to the mechanical configuration includes at least one of removing a sieve from the sieve setup, adding a sieve to the sieve setup, changing the concave type, changing the separator grate type, changing the duct setting, or adding a spread kit.

14. The computer-implemented method of claim 11, wherein the plurality of sensors includes at least one of a yield sensor, a harvest rate sensor, a sensor for detecting grain loss at a header of the combine harvester, a sensor for detecting material other than grain (MOG) amount in an elevator of the combine harvester, a grain moisture sensor, a grain quality sensor, a grain cleanliness sensor, a detector for determining where grain exits a processing stage in the combine harvester, a spread detector, a fuel consumption sensor, a sensor for detecting speed of the combine harvester, or a sensor for determining a location of the combine harvester.

15. The computer-implemented method of claim 11, wherein the operational metrics include at least one of a yield, a harvest rate, a header loss, an amount of MOG in an elevator of the combine harvester, a grain moisture, a grain quality, a grain cleanliness, a location where grain exits a processing stage, a spread, an amount of fuel, a speed of the combine harvester, or a location of the combine harvester.

16. The computer-implemented method of claim 11, wherein the performance target includes at least one of a yield target, a harvest rate, a maximum grain loss, a maximum fuel consumption rate, or a minimum ground speed.

17. The computer-implemented method of claim 11, wherein the performance metric includes at least one of an estimated loss in bushels per acre, an estimated monetary loss, a harvest rate in acres per hour, an operating cost per hour, a spread efficiency percentage, or an amount of nutrients consumed due to loss regrowth; and wherein the improvement estimate includes an increased capacity percentage, an improvement yield percentage, an increase in harvest rate, a monetary improvement per acre, or a decrease in operating costs per acre.

18. A control system for a combine harvester having a user interface, the control system comprising:
a communication element configured to send data to the user interface;
a memory element configured to store data; and
a processing element in communication with the communication element and the memory element, the processing element being configured to -
a receive data representative of a grain type, a commodity price for the grain type, a harvest rate target, and a mechanical configuration of the combine harvester,
receive data representative of a harvest rate,
compare the harvest rate with the harvest rate target,
determine a suggested adjustment to the mechanical configuration associated with an increase in harvest rate,
calculate a monetary amount associated with the increase in harvest rate based at least in part on the harvest rate and the commodity price for the grain type,
receive data representative of a cost associated with the suggested adjustment to the mechanical configuration, and
send the suggested adjustment to the mechanical configuration, the monetary amount associated with the increase in yield, and the cost associated with the suggested adjustment to the mechanical configuration to the communication element.

19. The control system of claim 18, wherein the processing element is further configured to -
receive data representative of an amount of fuel consumed by the combine harvester,
receive data representative of a speed of the combine harvester,
determine whether the combine harvester has reached a minimum combine harvester speed,
receive data representative of a fuel price,
calculate an operating cost based at least in part on the amount of fuel consumed by the combine harvester, the speed of the combine harvester, and the fuel price,
determine a second suggested adjustment to the mechanical configuration associated with an increase in combine harvester speed,
calculate a second monetary amount associated with the increase in combine harvester speed based at least in part on the amount of fuel consumed by the combine harvester, the increase in combine harvester speed, and the fuel price,
receive data representative of a cost associated with the second suggested adjustment to the mechanical configuration, and
send the second suggested adjustment to the mechanical configuration, the second monetary amount associated with the increase in combine harvester speed, and the cost associated with the second suggested adjustment to the mechanical configuration to the communication element.

20. The control system of claim 18, wherein the processing element is further configured to -
receive data representative of a width of a spread of the combine harvester,
compare the width of the spread of the combine harvester with an optimum spread width,
receive data representative of a germination rate associated with the grain type and a nutrients absorption rate associated with the grain type,
calculate an estimated amount of nutrients absorbed from the field based at least in part on the width of the spread, the germination rate associated, and the nutrients absorption rate, and
send the estimated amount of nutrients absorbed from the field and a suggested spreader kit for adjusting the width of the spread of the combine harvester to the communication element.
